# EUROPÄISCHE PATENTSCHRIFT

(11) **EP 0 917 948 B1**
(45) Veröffentlichungstag und Bekanntmachung des Hinweises auf die Patenterteilung: **14.04.2004**
(21) Anmeldenummer: 98120797.0
(22) Anmeldetag: 03.11.1998
(51) Int. Cl.: B31B 19/64, B31B 19/90, B29C 65/00

(54) **Vorrichtung und Verfahren zum Herstellen von wieder verschliessbaren Beuteln**
Apparatus and method for making reclosable bags
Appareil et procédé pour la production des sachets refermable

(30) Priorität: 19.11.1997 DE 29720469 U
(43) Veröffentlichungstag der Anmeldung: 26.05.1999
(73) Patentinhaber: Harro Höfliger Verpackungsmaschinen GmbH, 71573 Allmersbach im Tal (DE)
(72) Erfinder: Hamm, Klaus, 71384 Weinstadt (DE)
(74) Vertreter: Müller, Hans, Dipl.-Ing.

(56) Entgegenhaltungen:
- EP-A- 0 453 408
- EP-A- 0 622 169
- DE-A- 19 502 228

## Beschreibung

### TECHNISCHES GEBIET

Die Erfindung betrifft eine Möglichkeit, wieder verschließbare Beutel herzustellen. Bei den Beuteln kann es sich um Flach- oder Bodenfaltenbeutel handeln. Diese aus beispielsweise einem Folienmaterial hergestellten und mit Lebensmittelteilchen zu befüllenden Beutel können wieder verschlossen werden mittels eines sogenannten Wiederverschlußstreifens, der im oberen Bereich der Beutelwände angebracht ist. Die eine Hälfte dieses Wiederverschlußstreifens ist in der einen Beutelwand und die andere Hälfte in der anderen Beutelwand festgeschweißt. Beim Zusammendrücken der beiden Hälften und damit der beiden Beutelwände greifen die beiden Hälften des Wiederverschlußstreifens so ineinander, daß sie einen Verschluß für den Beutel darstellen. Durch Auseinanderziehen der beiden Beutelwände kann der Wiederverschlußstreifen geöffnet, das heißt die beiden Hälften des Wiederverschlußstreifens voneinander gelöst werden.

### STAND DER TECHNIK

Flach- und Bodenfaltenbeutel können aus schweißbarem Kunststoffbahnmaterial hergestellt werden. Der Wiederverschlußstreifen ist regelmäßig aus Kunststoff. Um nun den Kreuzungsbereich des Wiederverschlußstreifens mit den Längssiegelnähten des Beutels bleibend dicht zu verschließen, muß dort sehr viel Wärmeenergie eingebracht werden. Dies wird auch durch die im Querschnitt voluminöse Form der beiden Hälften des Wiederverschlußstreifens nötig, die im Bereich der Längssiegelnähte flüssigkeitsdicht mit diesen Längssiegelnähten verschweißt werden müssen. Beim Öffnen des Wiederverschlußstreifens bleiben seine beiden Hälften im Bereich der Längssiegelnähte verschlossen, um dort keine Leckage entstehen zu lassen.

Das Einbringen der in diesen Endbereichen des Wiederverschlußstreifens erforderlichen Wärmeenergie erfordert relativ viel Zeit. Dies bedingt ein entsprechend langes Verweilen des herzustellenden Beutels in dieser Siegelstation. Dadurch sinkt die Arbeitsleistung.

Um die Arbeitsleistung zu erhöhen, kann die Anzahl der Siegelstationen erhöht werden. Dadurch ist es möglich, nacheinander mehrmals Wärme in diesen Kreuzungsbereich einzubringen. Der Kreuzungsbereich von Wiederverschlußstreifen und Siegelnaht wird von der Außenseite des Beutels aus mehrmals gesiegelt, und so ausreichend Wärme an die Innenseite der Beutelwand und damit in den Bereich des Wiederverschlußstreifens gebracht. Dadurch kann der Wiederverschlußstreifen flachgepreßt und in die Siegelnaht eingeschweißt werden. Dieses Herstellverfahren verursacht durch die mehr als eine Siegelstation entsprechende Mehrkosten. Auch der Platzbedarf ist entsprechend groß. Von Nachteil ist auch, daß mit steigender Zahl an Siegelstationen bei einer Unterbrechung der Fertigung auch die Zahl der Ausschußbeutel entsprechend steigt, da eine Abkühlung der Siegelnaht vor ihrer endgültigen Fertigstellung an der letzten Siegelstation die Siegelnaht unvollständig macht. Da ein späteres nachträgliches "Fertigsiegeln" nicht möglich ist, ist der Beutel nicht zu gebrauchen.

Es ist bekannt, die im Kreuzungsbereich benötigte Wärmemenge dadurch zu vermindern, daß ein Teil der zu verschweißenden Materialien im Kreuzungsbereich herausgestanzt wird. So ist es bekannt, einen Teil des Wiederverschlußstreifens im Kreuzungsbereich auszustanzen. Dies hat große Nachteile bei einer erforderlich werdenden Formatverstellung. Es ist nämlich sehr schwierig und technisch aufwendig, die Ausstanzungen genau an der jeweils gewünschten Stelle vorzunehmen; eine zu große Ausstanzung würde zu Leckagen führen und eine zu kleine Ausstanzung würde den gewünschten Effekt vermindern.

Bei allen vorstehenden Herstellungsvarianten ist auch noch der technisch einigermaßen schwierige Umstand zu berücksichtigen, daß der Wiederverschlußstreifen sich beim Abzug von einer Rolle, auf der er aufgewickelt ist, unterschiedlich dehnt. Dadurch ist ein gezieltes Einbringen des Wiederverschlußstreifens in den Beutelbereich, wo er an den Beutelwänden befestigt werden soll, in der gewünschten Exaktheit kaum möglich.

Aus der gattungsbildenden EP-A-0 622 169 ist eine Vorrichtung der eingangs genannten Art bekannt, mit der allerdings kein Flachbeutel sondern ein sogenannter Schlauchbeutel im üblichen vertikalen Herstellungsprozess hergestellt wird. Der Schlauchbeutel besitzt eine einseitige Längsnaht, in der der Wiederverschlußstreifen in Art eines Reißverschlusses eingebaut ist. Die Vorrichtung besitzt (horizontale) äußere Siegelbacken zum Herstellen jeweils einer die Seitennaht des fertigen Beutels bildenden Längssiegelnaht und sie besitzt weitere (vertikale) äußere Siegelbacken zum Herstellen der Vertikalnaht durch Verschweißen der beiden Beutelwandränder mit den beiden Hälften eines Wiederverschlußstreifens. Bei der Herstellung der Vertikalnaht werden zwischen den Schwänzen des Wiederverschlußstreifens Röhrchen positioniert. Die Röhrchen enthalten Löcher, durch die heiße Luft gegen die Nut-Feder-Bereiche des Wiederverschlußstreifens geblasen werden kann. Diese Löcher sind aber nicht im Bereich der Siegelbacken vorhanden, mit denen die Längssiegelnaht hergestellt wird. Im Bereich dieser Siegelbacken können nämlich die einen bestimmten Raum einnehmenden Röhrchen nicht mehr vorhanden sein. Das bedeutet, dass das Blasen mit heißer Luft gegen die Nut-Feder-Bereiche des Wiederverschlußstreifens zeitlich nicht dann erfolgen kann, wenn die (horizontalen) Siegelbacken eine seitliche Längssiegelnaht herstellen. Das Erwärmen der Nut-Feder-Bereiche des Wiederverschlußstreifens erfolgt damit nicht zeitgleich mit dem Herstellen der Siegelverbindung im Kreuzungsbereich zwischen der seitlichen Längssiegelnaht und der vertikalen Siegelnaht. Einerseits durch die Verwendung von Luft als Heizmedium und andererseits durch das zeitversetzte Erwärmen ist der Wirkungsgrad der Erwärmung entsprechend gering.

### DARSTELLUNG DER ERFINDUNG

Ausgehend von diesem Stand der Technik liegt der Erfindung die Aufgabe zugrunde, eine verbesserte Möglichkeit zum Herstellen eines wieder verschließbaren Beutels mittels eines Wiederverschlußstreifens anzugeben.

Diese Erfindung ist für eine erfindungsgemäße Vorrichtung zum Herstellen von wieder verschließbaren Beuteln mittels eines Wiederverschlußstreifens durch die Merkmale des Anspruchs 1 und für ein erfindungsgemäßes entsprechendes Verfahren durch die Merkmale des Anspruchs 9 gegeben.

Die Erfindung beinhaltet, daß durch das Anordnen einer inneren Siegelbacke im Kreuzungsbereich von Längssiegelnaht und Wiederverschlußstreifen jede Hälfte des Wiederverschlußstreifens vor ihrem gemeinsamen Verschweißen mit den beiden Beutelwänden zunächst einmal für sich alleine flachgequetscht werden kann und dass nicht beide Hälften des Wiederverschlußstreifens, und damit der Wiederverschlußstreifen insgesamt, zusammengequetscht werden müssen. Durch das Positionieren einer Siegelbacke an der Innenseite einer jeden Hälfte des Wiederverschlußstreifens kann Wärme direkt gegen die Nut bzw. Feder des Wiederverschlußstreifens eingebracht werden. Durch das separate Flachquetschen der beiden Hälften kann ein extrem flacher und damit dünner Kreuzungsbereich zwischen dem Wiederverschlußstreifen und der Beutellängsnaht hergestellt werden. Je dünner der Kreuzungsbereich ausgebildet wird, umso besser und sicherer können Leckagen und damit Undichtigkeiten im Kreuzungsbereich vermieden werden. Aufgrund der sehr voluminösen Geometrie eines Wiederverschlußstreifens stellt der Kreuzungsbereich die größten Anforderungen bei der Konstruktion und Herstellung eines solchen wieder verschließbaren Beutels.

Es wird also erfindungsgemäß die Wärme nicht mehr nur von außen, also durch äußere Siegelbacken hindurch, zumindest in den Kreuzungsbereich von Wiederverschlußstreifen und Längssiegelnaht eingebracht, sondern es wird - und zwar zeitlich vorher - in diesen Kreuzungsbereich auch vom Innenbereich des Beutels aus Wärme in den Kreuzungsbereich und damit unmittelbar an den Wiederverschlußstreifen eingebracht.

Um Zwängungskräfte beim Zusammendrücken der Gegenbacken zu vermeiden, ist die zwischen den Gegenbacken positionierte Siegelbacke vorzugsweise schwimmend gelagert.

Vorzugsweise werden die beiden Gegenbacken ebenfalls beheizbar und damit als Siegelbacken ausgebildet. Auf diese Weise kann die Wärme nicht nur von außen sondern auch von innen, und damit beidseitig, auf den Wiederverschlußstreifen und die Beutelwände einwirken.

Nach einer vorteilhaften Ausführungsform der erfindungsgemäßen Vorrichtung zeichnet sich dieselbe durch drei, nacheinander von der Folienbahn, aus der der Beutel hergestellt wird, durchlaufene Siegelstationen aus. In der ersten Siegelstation werden die beiden Hälften des Wiederverschlußstreifens an die jeweilige Beutelwand angeschweißt. Der Wiederverschlußstreifen ist dazu verschlossen. Das bedeutet, daß die beiden Hälften des Wiederverschlußstreifens dicht ineinandergreifen. Das Anschweißen erfolgt derart, daß im Bereich der ineinander geklammerten Querschnittsbereiche der beiden Hälften des Wiederverschlußstreifens möglichst wenig Wärme im Bereich der Außenwände vorhanden ist. Die zweite Siegelstation besitzt die beiden äußeren Gegenbacken und die innere Siegelbacke. Durch Aktivieren der beiden Gegenbacken und der inneren Siegelbacke kann der in dieser Station geöffnete Wiederverschlußstreifen flachgedrückt und jeweils eine Hälfte des Wiederverschlußstreifens mit seinem flachgedrückten Bereich an die betreffende Beutelwand angeschweißt werden. In der dritten Siegelstation wird mit den dort vorhandenen äußeren Siegelbacken die Längssiegelnaht vollständig, das heißt auch im Kreuzungsbereich von Wiederverschlußstreifen und Längssiegelnaht, hergestellt.

Um den Wiederverschlußstreifen exakt an den Beutelwänden anschweißen zu können, ist derselbe in einer plattenartigen Halterung gehalten. Diese Halterung kann in den Innenraum zwischen den beiden Beutelwänden von oben eintauchen und so den - in der Halterung geschlossenen Wiederverschlußstreifen - exakt zwischen den beiden Beutelwänden positionieren. Das Aktivieren von äußeren Siegelbacken führt dann zum Anschweißen des Wiederverschlußstreifens an den Beutelwänden. In diesem Zustand ist der Beutel im Bereich dieses Wiederverschlußstreifens geschlossen.

Nähere Einzelheiten zu dieser plattenartigen Halterung sind den Ansprüchen und dem nachstehenden Ausführungsbeispiel beispielhaft zu entnehmen.

Um ein gegenseitiges Verrutschen der beiden äußeren Beutelwände beziehungsweise der beiden Folienbahnen zu verhindern und damit zu vermeiden, daß der angeschweißte Wiederverschlußstreifen nicht exakt ineinanderpaßt, kann vorgesehen werden, im unteren Bereich des Beutels zeitgleich, besser aber kurzzeitig vor dem Anschweißen des Wiederverschlußstreifens an den Beutelwänden, bereits einen unteren Abschnitt der Längssiegelnaht herzustellen. Dieser untere Bereich der Längssiegelnaht reicht noch nicht bis in den Bereich des Wiederverschlußstreifens. Dadurch ist es nach dem Herstellen dieses unteren Abschnittes der Längssiegelnaht noch möglich, den mit den Beutelwänden verschweißten Wiederverschlußstreifen auch im Bereich der Längssiegelnaht zu öffnen. Dieses Öffnen ist erforderlich, um mit Hilfe der inneren Siegelbacke, wie oben bereits ausgeführt ist, die beiden Hälften des Wiederverschlußstreifens flach zu drücken und jeweils im geöffneten Zustand an den Beutelwänden festzuschweißen. Erst anschließend wird dann, überlappend mit dem unteren Bereich der Längssiegelnaht, auch noch die restliche Längssiegelnaht im oberen Bereich des Beutels, und damit auch im Kreuzungsbereich mit dem Wiederverschlußstreifen, hergestellt.

Weitere Merkmale und Vorteile der Erfindung, auch zum erfindungsgemäßen Verfahren, sind den in den Ansprüchen ferner aufgeführten Merkmalen sowie dem nachstehenden Ausführungsbeispiel zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine schematische Seitenansicht eines erfindungsgemäß hergestellten Beutels,
- Fig. 1.1: eine teilweise Draufsicht auf einen geöffneten Beutel nach Fig 1.,

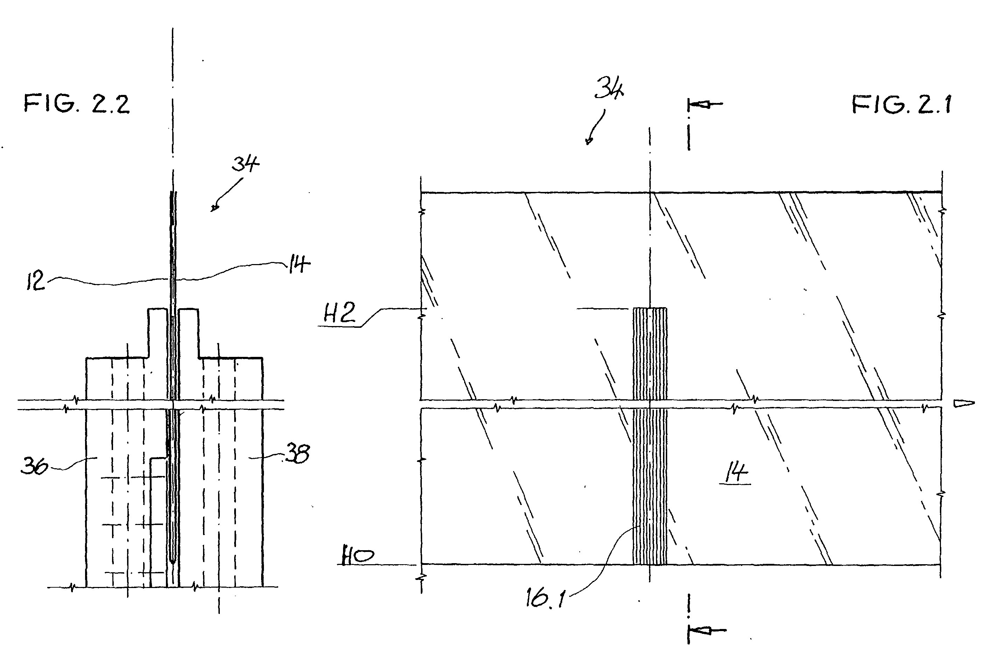

- Fig. 2.1: eine Ansicht auf eine Beutelwand innerhalb der ersten Siegelstation, in der der untere Bereich der Längssiegelnaht hergestellt wird,
- Fig. 2.2: eine Schnittdarstellung entsprechend der Schnittlinie in Fig. 2.1,
- Fig. 3.1: eine Ansicht auf die Beutelwand noch in der ersten Siegelstation mit oberen Siegelbacken, durch die ein in geschlossenem Zustand zwischen den beiden Beutelwänden mittels einer Halteplatte gehaltener Wiederverschlußstreifen an die beiden Beutelwände angeschweißt wird,
- Fig. 3.2: eine Schnittdarstellung entlang der Schnittlinie in Fig. 3.1,
- Fig. 3.3: eine vergrößerte Detaildarstellung des geschlossenen Wiederverschlußstreifens gemäß Darstellung von Fig. 3.2,
- Fig. 4.1: eine Ansicht auf die Beutelwand in einer zweiten Siegelstation, in der die beiden Hälften des hier geöffneten Wiederverschlußstreifens mittels einer zwischen ihnen positionierten inneren Siegelbacke und mittels äußerer Siegelbacken flachgedrückt und an die beiden Beutelwände angeschweißt werden,
- Fig. 4.2: eine Schnittdarstellung entlang der Schnittlinie in Fig. 4.1,

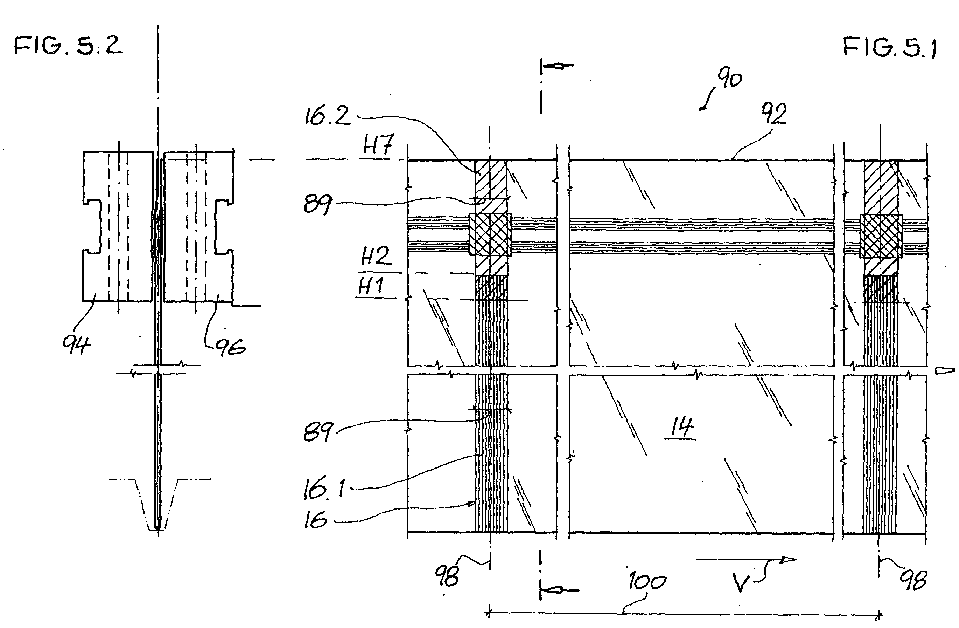

- Fig. 5.1: eine Ansicht auf die Beutelwand in einer dritten Siegelstation, in der mittels äußerer Siegelbacken der obere Bereich der Längssiegelnaht, auch im Kreuzungsbereich von Längssiegelnaht und Wiederverschlußstreifen hergestellt wird, und
- Fig. 5.2: eine Schnittdarstellung entlang der Schnittlinie in Fig. 5.1.

### WEGE ZUM AUSFÜHREN DER ERFINDUNG

Ein Beutel 10 besitzt zwei Wände 12, 14, die an ihrem in der Zeichnung linken und rechten Rand durch eine linke und rechte Längssiegelnaht 16 miteinander fest verschweißt sind. Im oberen Bereich der beiden Wände 12, 14 ist ein Wiederverschlußstreifen 18 angeordnet, mit dessen Hilfe die beiden Wände 12, 14 im Bereich dieses Wiederverschlußstreifens 18 verschlossen oder geöffnet werden können. Dazu ist der Wiederverschlußstreifen mit seinen beiden Hälften 20, 22 an der betreffenden Wand 12 beziehungsweise 14 angeschweißt. Im Bereich der Längssiegelnähte 16 ist der Wiederverschlußstreifen 18 fest und flüssigkeitsdicht mit den beiden Längssiegelnähten 16 und den beiden Wänden 12, 14 verschweißt. Dieser Kreuzungsbereich 24 von Wiederverschlußstreifen 18 und Längssiegelnaht 16 ist gegenüber dem übrigen Bereich der Längssiegelnaht 16 etwas verdickt vorhanden. Im oberen Bereich der beiden Wände 12, 14 ist in jeder Wand 12, 14 eine Aufhängeöffnung 26 beziehungsweise 28, die sich genau gegenüberliegen und gemeinsam eine Aufhängemöglichkeit für den geschlossenen Beutel 10 darstellen.

Der Beutel 10 ist im vorliegenden Fall ein Flachbeutel. Er ist aus einer einteiligen Folienbahn hergestellt. Bei seiner Herstellung ist diese einteilige Folienbahn um eine in Abzugsrichtung der Bahn verlaufende Kante umgefaltet und besitzt dadurch eine untere Längsfalte 30. Die beiden Wände 12, 14 stellen in Querrichtung der Folienbahn zwei Hälften der Folienbahn dar und sind über die Längsfalte 30 einteilig miteinander verbunden.

Der Bodenbereich des Beutels 10 kann unterschiedlich ausgebildet sein, je nachdem, um welche Art von Beutel es sich handelt. Unabhängig von der jeweiligen Bodenausbildung ist im oberen Bereich der Beutel, im Bereich der Öffnung 32 des betreffenden Beutels ein Wiederverschlußstreifen 18 vorhanden.

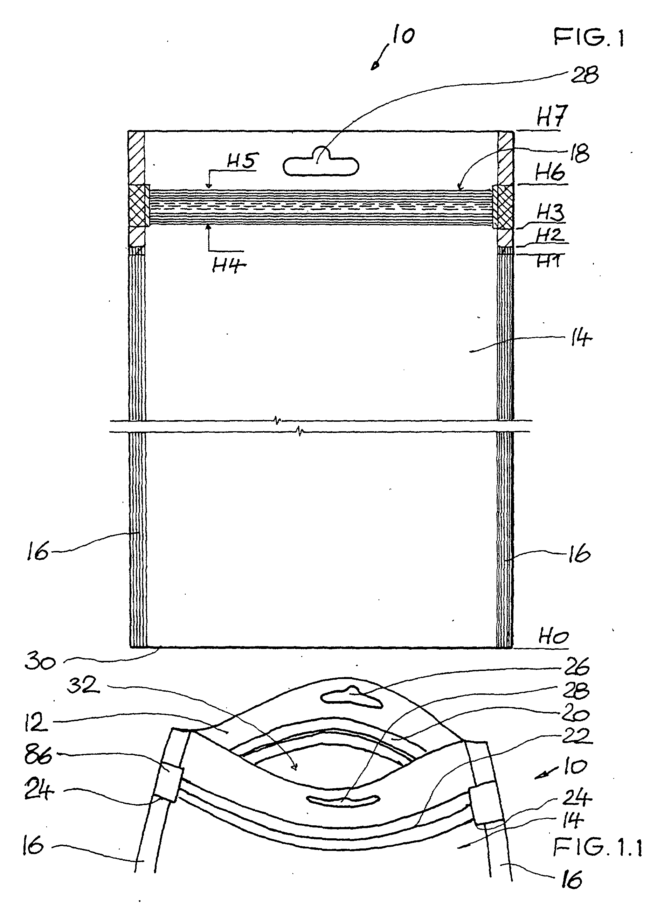

In Fig. 1 sind Höhenmarkierungen von H0 bis H7 angegeben, die verschiedene Siegelabschnitte höhenmäßig am Beutel 10 markieren, wie nachstehend noch näher beschrieben wird.

Beim Herstellen von Beuteln 10 aus einer endlos aufgewickelten Folienbahn wird diese Folienbahn um die Längsfalte 30 umgefaltet, so daß die gegenüberliegenden Bereiche der Folienbahn als spätere Wände 12, 14 sich gegenüberliegend vorhanden sind. Diese V-förmige Materialbahn durchläuft nacheinander drei Siegelstationen.

In der ersten Siegelstation 34 sind eine linke und rechte Siegelbacke 36, 38 vorhanden, die auf der Außenseite der beiden Wände 12, 14 positioniert sind. Mit Hilfe dieser beiden Siegelbacken 36, 38 läßt sich der untere Abschnitt 16.1 der später am Beutel 10 vorhandenen Längssiegelnaht 16 durch Verschweißen der beiden Wände 12, 14 herstellen. Der untere Abschnitt 16.1 reicht von H0 bis H2. Der obere Wert H2 liegt ein Stück weit unterhalb des unteren Randes (Maß H4) des später anzubringenden Wiederverschlußstreifens 18 (Fig. 1).

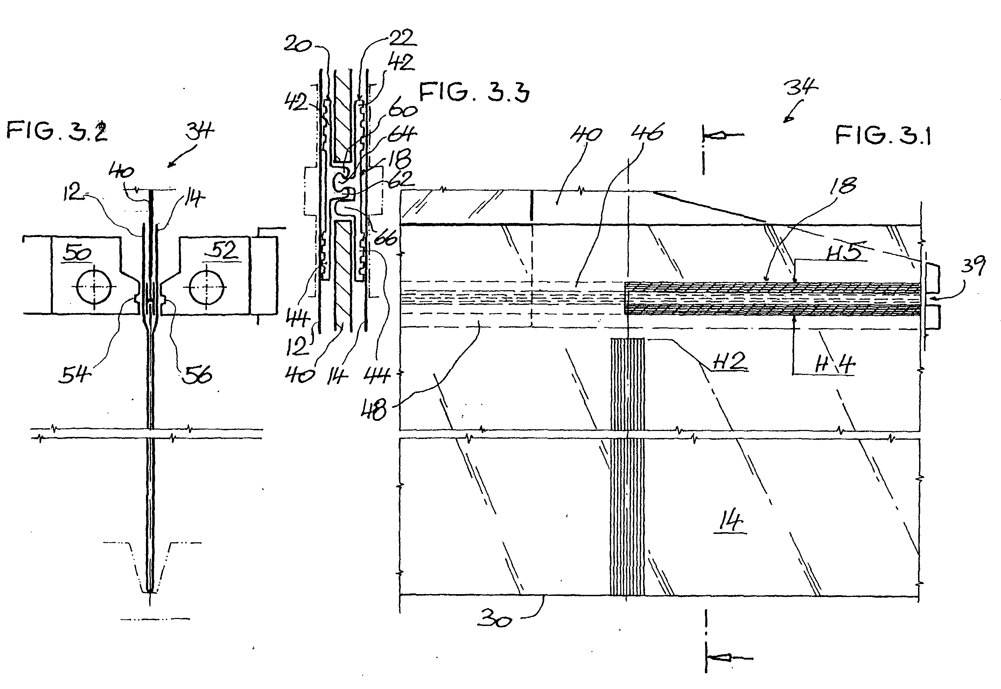

Zum Anbringen des Wiederverschlußstreifens 18, der stilisiert in H-Form in Fig. 3.2 dargestellt ist, an den beiden Wänden 12, 14, liegt derselbe geschlossen in einem Längsschlitz 39. Dieser Längsschlitz 39 ist in einer Halteplatte 40 eingeformt. Im Bereich der oberen und unteren Schenkel 42 und 44 der beiden Hälften 20 beziehungsweise 22 des Wiederverschlußstreifens 18 ist die Halteplatte 40 materialmäßig geschwächt ausgebildet; vergleiche geschwächte Bereiche 46, 48 in Fig. 3.1. Im in der Zeichnung nicht dargestellten linken Bereich der Halteplatte 40 ist dieselbe tunnelartig ausgebildet. Dadurch kann der Wiederverschlußstreifen 18 längs durch den Tunnel durchgezogen werden bis er, aus dem Tunnel herauskommend, im Längsschlitz 39, in etwa mit seiner Außenseite bündig zur Außenseite der Platte 40, vorhanden ist. Mittels äußerer linker und rechter Siegelbacken 50, 52, die mit jeweils einer Längsnut 54, 56 ausgestattet sind, kann der geschlossene Wiederverschlußstreifen 18 mit seinen oberen und unteren Schenkeln 42, 44 an die beiden Wände 12, 14 angeschweißt werden. Infolge der beiden Längsnute 54, 56 in den beiden Siegelbacken 50, 52 wird Wärme nicht unmittelbar in den Bereich der von der linken Hälfte 20 auskragenden Vorsprünge 60, 62 und der von der rechten Hälfte 22 auskragenden Vorsprünge 64, 66 gelangen. Dadurch werden diese Vorsprünge 60 bis 66 nicht thermisch verformt während der übrige Bereich des Wiederverschlußstreifens 18 an den Wänden 12, 14 angeschweißt wird. Dadurch ist es möglich, den an den Wänden 12, 14 angeschweißten Wiederverschlußstreifen 18 durch Auseinanderziehen der beiden Wände 12, 14 zu öffnen.

Das Anschweißen des Wiederverschlußstreifens 18 erfolgt in der Siegelstation 34 gleichzeitig oder kurzzeitig später mit dem Anbringen des unteren Abschnittes 16.1 der Längssiegelnaht 16 wie vorstehend bereits beschrieben ist. Die beiden Wände 12, 14 können in ihrem Zustand gemäß Fig. 3.1, also im Bereich des Wiederverschlußstreifens 18, auseinandergezogen werden, während dies im unteren Bereich der beiden Wände 12, 14 im Bereich des unteren Abschnittes 16.1 der Längssiegelnaht 16 nicht mehr möglich ist.

In der nachfolgenden zweiten Siegelstation 70 werden die beiden Hälften 20, 22 des Wiederverschlußstreifens 18 jeweils für sich flachgedrückt, so daß die Vorsprünge 60 bis 66 an den beiden Hälften 20, 22 nicht mehr so weit wie im nicht flachgedrückten, übrigen Bereich des Wiederverschlußstreifens 18, von den Schenkeln 42, 44 jeweils auskragen. Gleichzeitig werden auch diese flachgedrückten Bereiche des Wiederverschlußstreifens 18 an den Wänden 12, 14 des Beutels 10 angeschweißt.

Das Flachdrücken des mittleren Bereichs des Wiederverschlußstreifens 18 erfolgt durch eine in den Innenraum zwischen die beiden geöffneten Hälften 20, 22 des Wiederverschluß-streifens 18 von oben eingesetzte innere Siegelbacke 72. Diese ist durch Befestigung mittels in Querrichtung 76 angeordneter Schraubenfedern 78, 80 in dieser Querrichtung 76 beweglich und damit schwimmend gelagert.

Auf der Außenseite der beiden Wände 12, 14, in Querrichtung 76 der inneren Siegelbacke 72 gegenüberliegend, ist eine linke und rechte Siegelbacke 82, 84 vorhanden. Durch Aktivieren der inneren Siegelbacke 72 und der äußeren Siegelbacken 82, 84 werden die beiden Hälften 20, 22 des Wiederverschlußstreifens 18 flachgedrückt und weiter an die beiden Wände 12, 14 jeweils angeschweißt. Sollten die beiden Siegelbacken 82, 84 beim Aufeinanderzubewegen in Querrichtung 76 ungleich bewegt werden, treten an der Siegelbacke 72 durch deren schwimmende Lagerung keine seitlichen Biegekräfte auf.

Die Siegelbacke 72 ist nach oben aus dem Bereich der beiden Wände 12, 14 herausschwenkbar in nicht dargestellter Weise gelagert.

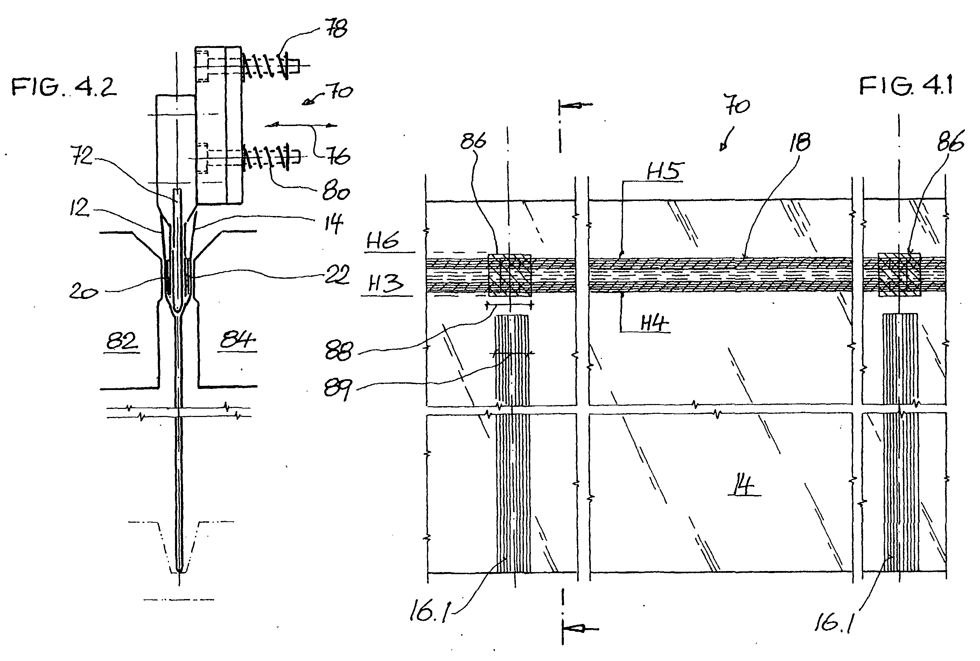

Der durch die innere Siegelbacke 72 und die äußeren Siegelbacken 82, 84 beeinflußte Bereich an den Wänden 12, 14 ist in Fig. 4.1 als schraffierter Rechteckbereich 86 ersichtlich. Dieser Bereich 86 reicht höhenmäßig vom Maß H3 bis H6 und überlappt in diesen Richtungen damit den zwischen den Höhen H4 und H5 sich erstreckenden Wiederverschlußstreifen 18 in seinem mittleren, zwischen den unteren Abschnitten 16.1 der Längssiegelnähte 16 vorhandenen Bereich. In Richtung des Wiederverschlußstreifens 18 besitzt dieser Bereich 86 die Breite 88. Die Breite 88 ist breiter als die Breite 89 des unteren Abschnitts 16.1 der Längssiegelnähte.

In einer nachfolgenden dritten Siegelstation 90 wird die Längssiegelnaht 16 nach oben, in Richtung zum oberen Rand 92 des Beutels 10 hin verlängert. Dazu sind eine linke und rechte Siegelbacke 94, 96 auf der Außenseite der beiden Wände 12, 14 vorhanden, die die beiden Wände 12, 14 in einem oberen Abschnitt 16.2 der Längssiegelnaht 16 verschweißen. Dieser obere Abschnitt 16.2 überlappt den unteren Abschnitt 16.1 und erstreckt sich vom Maß H1 bis zum oberen Rand 92, dem Maß H7. Durch die in den Bereichen H1 bis H2 erfolgende Überlappung der beiden Abschnitte 16.1 und 16.2 wird ein dichter Anschluß zwischen diesen beiden Abschnitten 16.1 und 16.2 sichergestellt. Die Breite 89 des unteren Abschnitts 16.1 entspricht der Breite 89 des oberen Abschnitts 16.2.

Nach Durchtrennen der die Wände 12 und 14 enthaltenden Materialbahn in Abzugsrichtung V an Längstrennlinien 98, die im mittleren Bereich der Längssiegelnähte 16 vorhanden sind, werden Beutel der Breite 100 aus der Materialbahn vereinzelt. Die vereinzelten Beutel 10 können dann, wie an sich bekannt, weiter gehandhabt, wie beispielsweise gefüllt werden.

Der Wiederverschlußstreifen 18 ist im Bereich vor der zweiten Siegelstation 70 geschlossen, was zum Beispiel im Zusammenhang mit der ersten Siegelstation (Fig. 3) bereits vorstehend beschrieben ist. In der zweiten Siegelstation 70 ist Wiederverschlußstreifen 18 geöffnet, um zwischen seinen beiden Hälften 20, 22 Platz zu schaffen für die innere Siegelbacke 72. Das Öffnen des Wiederverschlußstreifens 18 kann auf einfache Weise dadurch bewirkt werden, daß in Abzugsrichtung V (der die Wände 12, 14 enthaltenden Materialbahn) von oben ein Sperrglied, beispielsweise ein Stab in den Bereich des Wiederverschlußstreifens 18, zwischen dessen beiden Hälften 20, 22 positioniert wird. Die um den Stab seitlich vorbeigeführten beiden Hälften 20, 22 stellen ein kontinuierliches Öffnen des Wiederverschlußstreifens 18 beim Bewegen der Folienbahn und des Wiederverschlußstreifens 18 sicher. Ein weiterer derartiger Stab wird vorteilhafterweise in Abzugsrichtung V nach der zweiten Siegelstation 70 angeordnet. Dadurch wird sichergestellt, daß zwischen diesen beiden Stäben, das heißt im Bereich der zweiten Siegelstation 70 der Wiederverschlußstreifen geöffnet vorhanden ist.

## Patentansprüche

1. Vorrichtung zum Herstellen von wieder verschließbaren Beuteln (10), bei denen ihre wieder verschließbare Öffnung (32) von einander gegenüberliegenden Hälften (20, 22) eines Wiederverschlußstreifens (18) eingerahmt wird, die (20, 22) an den einander gegenüberliegenden Beutelwänden (12, 14) festgeschweißt sind und die (20, 22) endseitig mit den beiden seitlichen Längsiegelnähten (16) des Beutels (10) verschweißt sind,
- mit äußeren Siegelbacken (36, 38; 94, 96) zum Herstellen jeweils einer Längssiegelnaht (16),
- mit weiteren äußeren Siegelbacken (50, 52) zum Verschweißen der Beutelwände (12, 14) mit den beiden Hälften (20, 22) des Wiederverschlußstreifens (18),
**dadurch gekennzeichnet, dass**
- zumindest eine innere Siegelbacke (72) im Kreuzungsbereich von Längssiegelnaht (16) und Wiederverschlußstreifen (18) zwischen den beiden Beutelwänden (12, 14) positionierbar ist,
- zumindest eine Gegenbacke (82, 84) auf der jeweiligen Außenseite der beiden Beutelwände (12, 14), so vorhanden ist, dass zwischen der inneren Siegelbacke (72) und der jeweiligen Gegenbacke (82, 84) eine Beutelwand (12, 14) mit ihrem Kreuzungsbereich (86) positionierbar und die betreffende Hälfte (20, 22) des Wiederverschlußstreifens (18) flachdrückbar und auch mit ihrem flachgedrückten Bereich an der jeweiligen Beutelwand (12, 14) anschweißbar ist.

2. Vorrichtung nach Anspruch 1,
**dadurch gekennzeichnet, dass** die innere Siegelbacke (72) schwimmend zwischen zwei äußeren Gegenbacken (82, 84) positionierbar ist.

3. Vorrichtung nach einem der vorhergehenden Ansprüchen,
**dadurch gekennzeichnet, dass**
- die Gegenbacke (82, 84) als Siegelbacke ausgebildet ist.

4. Vorrichtung nach einem der vorstehenden Ansprüchen,
**dadurch gekennzeichnet, dass**
- eine erste Siegelstation (34) zum Anschweißen der beiden Hälften (20, 22) des Wiederverschlußstreifens (18) an den Beutelwänden (12, 14) vorhanden ist,
- eine zweite Siegelstation (70) mit der zumindest einen inneren Siegelbacke (72) und der zumindest einen Gegenbacke (82,84) zum Flachdrücken jeweils einer Hälfte (20, 22) des Wiederverschlußstreifens (18) und zum Anschweißen dieses flachgedrückten Bereiches des Wiederverschlußstreifens (18) an der betreffenden Beutelwand (12, 14) vorhanden ist,
- eine dritte Siegelstation (90) mit äußeren Siegelbacken (94, 96) zum Herstellen der vollständigen Siegelnaht (16) vorhanden ist.

5. Vorrichtung nach einem der vorstehenden Ansprüche,
**dadurch gekennzeichnet, dass**
- eine Halterung (40) für beide Hälften (20, 22) des Wiederverschlußstreifens (18) so vorhanden ist, dass der Wiederverschlußstreifen (18) zwischen den beiden Beutelwänden (12, 14) positionierbar gehalten ist.

6. Vorrichtung nach Anspruch 5,
**dadurch gekennzeichnet, dass**
- die Halterung eine einen Schlitz (39) aufweisende Platte (40) ist,
- in dem Schlitz (39) der Wiederverschlußstreifen (18) mit seinen ineinandergefügten Hälften (20, 22) in verschlossenem Zustand haltbar ist.

7. Vorrichtung nach einem der Ansprüche 4 bis 6,
**dadurch gekennzeichnet, dass**
- in der ersten Siegelstation (34) äußere, untere Siegelbacken (36, 38) zum Anbringen eines ersten, unteren Abschnittes (16.1) der Längssiegelnaht (16) und die weiteren äußeren Siegelbacken (50, 52) zum Festschweißen des Wiederverschlußstreifens (18) an den Beutelwänden (12, 14) vorhanden sind, die (50, 52) zu diesen unteren Siegelbacken (36, 38) in Längsrichtung der Längssiegelnaht (16) beabstandet sind,
- diese weiteren äußeren Siegelbacken (50, 52) zeitgleich oder kurz nach den unteren Siegelbacken (36, 38) aktivierbar sind.

8. Vorrichtung nach Anspruch 4 und 7,
**dadurch gekennzeichnet, dass**
- in der dritten Siegelstation (90) äußere, obere Siegelbacken (94, 96) zum Anbringen eines zweiten, oberen Abschnittes (16.2) der Längssiegelnaht (16) so vorhanden sind, dass
- dieser obere Abschnitt (16.2) den unteren Abschnitt (16.1) der Längssiegelnaht (16) überlappt.

9. Verfahren zum Herstellen von wieder verschließbaren Beuteln (10), bei denen ihre wieder verschließbare Öffnung (32) von einander gegenüberliegenden Hälften (20, 22) eines Wiederverschlußstreifens (18) eingerahmt wird, die (20, 22) an den einander gegenüberliegenden Beutelwänden (12, 14) festgeschweißt sind und die (20, 22) endseitig mit den beiden seitlichen Längssiegelnähten (16) des Beutels (10) verschweißt sind,
**dadurch gekennzeichnet, dass**
- im Kreuzungsbereich (86) von Wiederverschlußstreifen (18) und Längssiegelnaht (16),
-- in einem ersten Schritt in jede der beiden Hälften (20, 22) des Wiederverschlußstreifens, nachdem sie (20, 22) an die Beutelwände (12, 14) festgeschweißt worden sind, getrennt voneinander Wärme eingebracht wird, um die Hälften (20, 22) getrennt voneinander flachzudrücken, und um auch den f lachgedrückten Bereich der beiden Hälften (20, 22) an den beiden Beutelwänden (12, 14) fest anzuschweißen,
-- anschließend, in einem zweiten Schritt, die beiden flachgedrückten, an den Innenseiten der beiden Beutelwände (12, 14) festgeschweißten Hälften (20, 22) durch Einbringen von Wärme miteinander zu verschweißen.

10. Verfahren nach Anspruch 9,
**dadurch gekennzeichnet, dass** in dem ersten Schritt im Kreuzungsbereich (86)
- eine innere Siegelbacke (72) zwischen beiden Hälften (20, 22) des Wiederverschlußstreifens (18) und Gegenbacken (82, 84) außen an den beiden Beutelwänden (12, 14) jeweils positioniert werden,
- die innere Siegelbacke (72) aufgeheizt wird,
- die beiden äußeren Gegenbacken (82, 84) zusammengedrückt werden.

11. Verfahren nach Anspruch 10,
**dadurch gekennzeichnet, dass**
- nicht nur die innere Siegelbacke (72) sondern auch zunächst eine der Gegenbacken (82, 84) aufgeheizt wird.

12. Verfahren nach einem der Ansprüche 9 bis 11,
**dadurch gekennzeichnet, dass** in dem zweiten Schritt
- nach Entfernen der inneren Siegelbacke (72) und der Gegenbacken (82, 84) mittels außen an den Beutelwänden (12, 14) positionierter und aufgeheizter äußerer Siegelbacken (94, 96) der obere Abschnitt (16.2) der Längssiegelnaht (16), der den Kreuzungsbereich (86) enthält, hergestellt wird.

## Claims

1. Apparatus for producing recloseable bags (10) in which the recloseable opening (32) of said bags is surrounded by mutually opposite halves (20, 22) of a recloseable strip (18), these halves (20, 22) being firmly welded to the mutually opposite bag walls (12, 14) and, at the ends, being welded to the two lateral longitudinal sealing seams (16) of the bag (10),
- having outer sealing jaws (36, 38; 94, 96) for producing in each case one longitudinal sealing seam (16),
- having further outer sealing jaws (50, 52) for welding the bag walls (12, 14) to the two halves (20, 22) of the recloseable strip (18),
**characterized in that**
- at least one inner sealing jaw (72) can be positioned between the two bag walls (12, 14) in the crossover region of the longitudinal sealing seam (16) and recloseable strip (18),
- at least one counter-jaw (82, 84) is provided on the respective outer side of the two bag walls (12, 14) such that, between the inner sealing jaw (72) and the respective counter-jaw (82, 84), it is possible to position a bag wall (12, 14) by way of its crossover region (86) and to press flat the relevant half (20, 22) of the recloseable strip (18) and weld the same, by way of its pressed-flat region, to the respective bag wall (12, 14).

2. Apparatus according to Claim 1, **characterized in that** the inner sealing jaw (72) can. be positioned in a floating manner between two outer counter-jaws (82, 84).

3. Apparatus according to one of the preceding claims, **characterized in that**
- the counter-jaw (82, 84) is designed as a sealing jaw.

4. Apparatus according to one of the preceding claims, **characterized in that**
- a first sealing station (34) is provided for welding the two halves (20, 22) of the recloseable strip (18) to the bag walls (12, 14),
- a second sealing station (70), with the at least one inner sealing jaw (72) and the at least one counter-jaw (82, 84), is provided for pressing flat in each case one half (20, 22) of the recloseable strip (18) and for welding said pressed-flat region of the recloseable strip (18) to the relevant bag wall (12, 14),
- a third sealing station (90), with outer sealing jaws (94, 96), is provided for producing the finished sealing seam (16).

5. Apparatus according to one of the preceding claims, **characterized in that**
- a mount (40) for the two halves (20, 22) of the recloseable strip (18) is provided such that the recloseable strip (18) is retained such that it can be positioned between the two bag walls (12, 14).

6. Apparatus according to Claim 5, **characterized in that**
- the mount is a plate (40) which has a slit (39),
- the recloseable strip (18) can be retained in the slit (39) with its interengaging halves (20, 22) in the closed state.

7. Apparatus according to one of Claims 4 to 6, **characterized in that**
- the first sealing station (34) contains outer, bottom sealing jaws (36, 38) for fitting a first, bottom section (16.1) of the longitudinal sealing seam (16) and the further outer sealing jaws (50, 52) for firmly welding the recloseable strip (18) to the bag walls (12, 14), the further outer sealing jaws (50, 52) being spaced apart from said bottom Sealing jaws (36, 38) in the longitudinal direction of the longitudinal sealing seam (16),
- these further outer sealing jaws (50, 52) can be activated at the same time as, or shortly after, the bottom sealing jaws (36, 38).

8. Apparatus according to Claims 4 and 7, **characterized in that**
- the third sealing station (90) contains outer, top sealing jaws (94, 96) for fitting a second, top section (16.2) of the longitudinal sealing seam (16), such that
- this top section (16.2) overlaps the bottom section (16.1) of the longitudinal sealing seam (16).

9. Method of producing recloseable bags (10) in which the recloseable opening (32) of said bags is surrounded by mutually opposite halves (20, 22) of a recloseable strip (18), these halves (20, 22) being firmly welded to the mutually opposite bag walls (12, 14) and, at the ends, being welded to the two lateral longitudinal sealing seams (16) of the bag (10),
**characterized in that**
- in the crossover region (86) of the recloseable strip (18) and longitudinal sealing seam (16),
-- in a first step, heat is introduced separately into each of the two halves (20, 22) of the recloseable strip, after these halves (20, 22) have been firmly welded to the bag walls (12, 14), in order for the halves (20, 22) to be pressed flat separately from one another, and in order also for the pressed-flat region of the two halves (20, 22) to be firmly welded to the two bag walls (12, 14),
-- then, in a second step, the two pressed-flat halves (20, 22), firmly welded to the inner sides of the two bag walls (12, 14), can be welded to one another by the introduction of heat.

10. Method according to Claim 9, **characterized in that**,
in the first step, in the crossover region (86),
- an inner sealing jaw (72) is positioned in each case between two halves (20, 22) of the recloseable strip (18) and counter-jaws (82, 84) are positioned in each case on the outside of the two bag walls (12, 14),
- the inner sealing jaw (72) is heated up,
- the two outer counter-jaws (82, 84) are pressed together.

11. Method according to Claim 10, **characterized in that**
- not just the inner sealing jaw (72) but also, in the first instance, one of the counter-jaws (82, 84) is heated up.

12. Method according to one of Claims 9 to 11,
**characterized in that**,
in the second step
- following removal of the inner sealing jaw (72) and of the counter-jaws (82, 84), by means of outer sealing jaws (94, 96) which have been positioned on the outside of the bag walls (12, 14) and heated up, the top section (16.2) of the longitudinal sealing seam (16), this top section containing the crossover region (86), is produced.

## Revendications

1. Dispositif de fabrication de sachets refermables (10), dont l'ouverture refermable (32) est encadrée par des moitiés en vis-à-vis (20, 22) d'une bande de refermeture (18) qui sont fixées par soudage sur les parois en vis-à-vis (12, 14) du sachet et qui, à leurs extrémités, sont assemblées par soudage aux deux joints scellés longitudinaux latéraux (16) du sachet (10),
- avec des mâchoires de scellement extérieures (36, 38 ; 94, 96) pour réaliser un joint de scellement longitudinal (16) respectif,
- avec des mâchoires de scellement extérieures supplémentaires (50, 52) pour assembler par soudage les parois (12, 14) du sachet aux deux moitiés (20, 22) de la bande de refermeture (18),
**caractérisé en ce que**
- au moins une mâchoire de scellement intérieure (72) peut être positionnée entre les deux parois (12, 14) du sachet dans la région de croisement du joint de scellement longitudinal (16) et de la bande de refermeture (18),
- au moins une contre-mâchoire (82, 84) est présente, sur le côté extérieur respectif des deux parois (12, 14) du sachet, de telle sorte qu'une paroi (12, 14) du sachet peut être positionnée par sa région de croisement (86) entre la mâchoire de scellement intérieure (72) et la contre-mâchoire (82, 84) respective, et que la moitié concernée (20, 22) de la bande de refermeture (18) peut être pressée à plat et peut être soudée également par sa région pressée à plat sur la paroi respective (12, 14) du sachet.

2. Dispositif selon la revendication 1, **caractérisé en ce que** la mâchoire de scellement intérieure (72) peut être positionnée en montage flottant entre deux contre-mâchoires extérieures (82, 84).

3. Dispositif selon l'une des revendications précédentes, **caractérisé en ce que** la contre-mâchoire (82, 84) est réalisée sous forme de mâchoire de scellement.

4. Dispositif selon l'une des revendications précédentes, **caractérisé en ce que**
- il est prévu un premier poste de scellement (34) pour souder les deux moitiés (20, 22) de la bande de refermeture (18) sur les parois (12, 14) du sachet,
- il est prévu un deuxième poste de scellement (70), doté de la mâchoire de scellement intérieure (72) au moins unique et de la contre-mâchoire (82, 84) au moins unique, pour presser à plat une moitié respective (20, 22) de la bande de refermeture (18) et pour souder cette région pressée à plat de la bande de refermeture (18) sur la paroi concernée (12, 14) du sachet,
il est prévu un troisième poste de scellement (90), doté de mâchoires de scellement extérieures (94, 96), pour réaliser le joint de scellement complet (16).

5. Dispositif selon l'une des revendications précédentes, **caractérisé en ce qu'**un moyen de maintien (40) est présent pour les deux moitiés (20, 22) de la bande de refermeture (18) de telle sorte que la bande de refermeture (18) est maintenue de façon positionnable entre les deux parois (12, 14) du sachet.

6. Dispositif selon la revendication 5, **caractérisé en ce que**
- le moyen de maintien est une plaque (40) présentant une fente (39),
- la bande de refermeture (18) peut être maintenue à l'état fermé dans la fente (39), par ses deux moitiés (20, 22) assemblées par emboîtement.

7. Dispositif selon l'une des revendications 4 à 6, **caractérisé en ce que**
- dans le premier poste de scellement (34), il est prévu des mâchoires de scellement extérieures inférieures (36, 38) pour apposer une première partie, inférieure (16.1) du joint de scellement longitudinal (16), et les mâchoires de scellement extérieures supplémentaires (50, 52) pour fixer par soudage la bande de refermeture (18) sur les parois (12, 14) du sachet, lesquelles mâchoires (50, 52) sont distantes de ces mâchoires de scellement inférieures (36, 38) dans la direction longitudinale du joint de scellement longitudinal (16),
- ces mâchoires de scellement extérieures supplémentaires (50, 52) peuvent être activées en même temps que les mâchoires de scellement inférieures (36, 38), ou peu après celles-ci.

8. Dispositif selon les revendications 4 et 7, **caractérisé en ce que**
- dans le troisième poste de scellement (90), des mâchoires de scellement extérieures supérieures (94, 96) sont présentes, pour appliquer une deuxième partie, supérieure (16.2) du joint de scellement longitudinal (16), de telle sorte que
- cette partie supérieure (16.2) chevauche la partie inférieure (16.1) du joint de scellement longitudinal (16).

9. Procédé de fabrication de sachets refermables (10), dont l'ouverture refermable (32) est encadrée par des moitiés en vis-à-vis (20, 22) d'une bande de refermeture (18) qui sont fixées par soudage sur les parois en vis-à-vis (12, 14) du sachet et qui, à leurs extrémités, sont assemblées par soudage aux deux joints scellés longitudinaux latéraux (16) du sachet (10),
**caractérisé en ce que**, dans la région de croisement (86) de la bande de refermeture (18) et du joint de scellement longitudinal (16),
- au cours d'une première étape, de la chaleur est introduite séparément dans chacune des deux moitiés (20, 22) de la bande de refermeture, après qu'elles aient été fixées par soudage aux parois (12, 14) du sachet, afin de presser à plat les moitiés (20, 22) séparément l'une de l'autre, et afin de souder également fixement sur les deux parois (12, 14) du sachet la région pressée à plat des deux moitiés (20, 22),
- ensuite, au cours d'une deuxième étape, les deux moitiés (20, 22) pressées à plat et fixées par soudage sur les côtés intérieurs des deux parois (12, 14) du sachet sont assemblées par soudage entre elles par introduction de chaleur.

10. Procédé selon la revendication 9, **caractérisé en ce que**, au cours de la première étape, dans la région de croisement (86),
- une mâchoire de scellement intérieure (72) est positionnée entre les deux moitiés (20, 22) de la bande de refermeture (18), et des contre-mâchoires (82, 84) sont respectivement positionnées extérieurement sur les deux parois (12, 14) du sachet,
- la mâchoire de scellement intérieure (72) est chauffée,
- les deux contre-mâchoires extérieures (82, 84) sont pressées l'une contre l'autre.

11. Procédé selon la revendication 10, **caractérisé en ce qu'**on chauffe non seulement la mâchoire de scellement intérieure (72), mais aussi, initialement, une des contre-mâchoires (82, 84).

12. Procédé selon l'une des revendications 9 à 11, **caractérisé en ce que**, au cours de la deuxième étape, après avoir éloigné la mâchoire de scellement intérieure (72) et les contre-mâchoires (82, 84), on réalise, au moyen de mâchoires de scellement extérieures (94, 96) positionnées extérieurement sur les parois (12, 14) du sachet et chauffées, la partie supérieure (16.2) du joint de scellement longitudinal (16), qui contient la région de croisement (86).
